# FASCICULE DE BREVET EUROPEEN

(11) **EP 3 078 599 B1**
(45) Date de publication et mention de la délivrance du brevet: **24.05.2017**
(21) Numéro de dépôt: 15305515.7
(22) Date de dépôt: 08.04.2015
(51) Int. Cl.: B64G 1/40, B64G 1/42, F03H 1/00

(54) **UNITÉ D'ALIMENTATION DE PROPULSION ÉLECTRIQUE DE SATELLITE ET SYSTÈME DE GESTION DE PROPULSION ÉLECTRIQUE D'UN SATELLITE**
STROMVERSORGUNGSEINHEIT EINES ELEKTRISCHEN ANTRIEBS EINES SATELLITEN, UND STEUERSYSTEM DES ELEKTRISCHEN ANTRIEBS EINES SATELLITEN
SATELLITE ELECTRIC PROPULSION SUPPLY UNIT AND SYSTEM FOR MANAGING ELECTRIC PROPULSION OF A SATELLITE

(43) Date de publication de la demande: 12.10.2016
(73) Titulaire: THALES, 92400 Courbevoie (FR)
(72) Inventeur: Gruwe, Alain, 1020 Bruxelles (BE); Ledent, Philippe, 4670 Blegny (BE)
(74) Mandataire: Brunelli, Gérald

(56) Documents cités:
- EP-A2- 2 735 736
- WO-A1-2012/164203
- WO-A1-2013/034825

## Description

L'invention porte sur une unité d'alimentation de propulsion électrique de satellite et sur un système de gestion de propulsion électrique d'un satellite.

Les satellites récents utilisent de plus en plus souvent une propulsion électrique, ce qui rend primordiale la fiabilité de cette propulsion électrique.

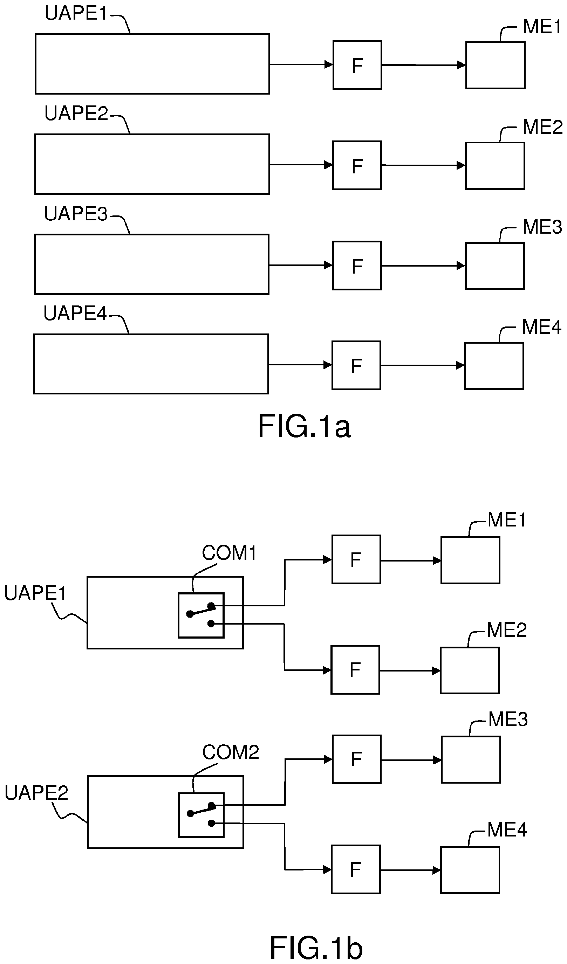

Il est connu, comme illustré sur la figure 1A, des systèmes de propulsion électrique de satellite, comprenant quatre unités d'alimentation UAPE1, UAPE2, UAPE3 et UAPE4 et quatre moteurs électriques de propulsion ME1, ME2, ME3 et ME4 respectivement reliés aux unités d'alimentation. Dans ce type de système, chaque connexion entre un moteur électrique de propulsion ME1, ME2, ME3 et ME4 et l'unité d'alimentation correspondante UAPE1, UAPE2, UAPE3 et UAPE4 est munie d'un filtre F d'émission conduite.

Un filtre d'émission conduite est un filtre incluant principalement des composants de filtrage (résistances, capacités, inductances,...) et dont le but est de filtrer les perturbations provenant du moteur vers l'unité d'alimentation correspondante de manière à protéger l'unité d'alimentation et au final limiter les émissions conduites et rayonnées renvoyées vers le satellite.

Dans un tel système, la perte, ou panne de fonctionnement, d'une unité d'alimentation de propulsion électrique signifie alors la perte d'un moteur électrique de propulsion, qui ne sera plus alimenté par aucune unité d'alimentation.

Il est également connu, voir le document EP 2 735 736, comme divulgué sur la figure 1B, des systèmes de propulsion électrique de satellite, comprenant deux unités d'alimentation UAPE1 et UAPE2 et quatre moteurs électriques de propulsion ME1, ME2, ME3 et ME4. Chacune des deux unités d'alimentation UAPE1 et UAPE2 est respectivement reliée à deux moteurs électriques parmi les quatre.

En l'espèce, l'unité d'alimentation UAPE1 est reliée aux moteurs électriques de propulsion ME1 et ME2, et l'unité d'alimentation UAPE2 est reliée aux moteurs électriques de propulsion ME3 et ME4. Chaque unité d'alimentation UAPE1, UAPE2 est munie d'un commutateur respectif COM1, COM2 permettant de commuter l'alimentation sur un des deux moteurs auxquels elle est reliée.

En l'espèce le commutateur COM1 de l'unité d'alimentation UAPE1 permet de commuter l'alimentation électrique de l'unité d'alimentation UAPE1 sur le moteur électrique ME1 ou le moteur électrique ME2, et le commutateur COM2 de l'unité d'alimentation UAPE2 permet de commuter l'alimentation électrique de l'unité d'alimentation UAPE2 sur le moteur électrique ME3 ou le moteur électrique ME4.

Chaque connexion entre un moteur électrique de propulsion ME1, ME2, ME3 et ME4 et son unité d'alimentation correspondante UAPE1 et UAPE2 est munie d'un filtre F d'émission conduite.

Dans un tel système, la perte, ou panne de fonctionnement, d'une unité d'alimentation de propulsion électrique signifie alors la perte de deux moteurs électriques de propulsion, qui ne seront alors plus alimentés par aucune unité d'alimentation.

Un but de l'invention est de pallier les problèmes précédemment cités, et particulièrement d'améliorer la fiabilité des systèmes de propulsion électrique de satellite.

Aussi, il est proposé, selon un aspect de l'invention, une unité d'alimentation de propulsion électrique de satellite comprenant:
- une source interne de puissance électrique;
- une entrée externe adaptée pour recevoir une puissance électrique d'une source externe de puissance électrique;
- une première sortie externe et une deuxième sortie externe adaptées pour délivrer en sortie respectivement une première puissance électrique et une deuxième puissance électrique;
- un premier élément de sélection et un deuxième élément de sélection tels que:
   - le premier élément de sélection est muni d'une première entrée interne connectée à la source interne et de deux sorties : la première sortie externe et une sortie interne connectée à une deuxième entrée interne du deuxième élément de sélection; et
   - le deuxième élément de sélection est muni d'une sortie correspondant à la deuxième sortie externe et de deux entrées : l'entrée externe et la deuxième entrée interne.

Une telle unité d'alimentation de propulsion électrique de satellite permet de fiabiliser la deuxième sortie externe de l'unité d'alimentation car cette sortie peut être alimentée soit par la source interne soit par la source externe. La première sortie externe peut alors être utilisée en tant que source.

Dans un mode de réalisation, l'unité d'alimentation de propulsion électrique de satellite comprend un filtre de bruit d'émission conduite disposé directement en amont de la deuxième sortie.

Une telle unité d'alimentation permet d'intégrer un filtre de bruit d'émission conduite, et ainsi de gagner en compacité et en simplicité pour leur intégration dans des satellites, en évitant d'avoir à ajouter de tels filtres entre des unités d'alimentation et des moteurs électriques.

En variante, l'unité d'alimentation de propulsion électrique de satellite comprend un filtre de bruit d'émission conduite disposé directement en amont de la première sortie.

En cas, il est possible de gagner de la place dans l'unité d'alimentation et/ ou de déplacer la dissipation de F ailleurs.

Selon un mode de réalisation, le premier élément de sélection comprend un commutateur.

La réalisation du premier élément de sélection au moyen d'un commutateur est aisée, de coût limité, et limite les pertes par dissipation thermique.

Dans un mode de réalisation, le deuxième élément de sélection comprend une diode disposée en aval de chacune des deux entrées.

L'utilisation de diodes pour réaliser le deuxième élément de sélection permet d'éviter une commande extérieure, et est de coût réduit.

En variante, le deuxième élément de sélection comprend un commutateur.

L'utilisation d'un commutateur pour réaliser le deuxième élément de sélection permet de limiter les pertes par dissipation thermique et d'éviter, comme dans la variante précédente, une chute de tension électrique directe due aux diodes.

Il est également proposé, selon un aspect de l'invention, un système de gestion de propulsion électrique d'un satellite, comprenant une unité de commande électronique, une pluralité de N unités d'alimentation de propulsion électrique telles que décrites précédemment, respectivement reliées à N moteurs électriques de propulsion.

Chaque unité d'alimentation de propulsion électrique est connectée, par sa deuxième sortie externe, à un moteur électrique, chaque liaison entre la sortie du deuxième élément de sélection et le moteur électrique comprend un filtre de bruit d'émission conduite, et chaque première sortie externe d'une unité d'alimentation de propulsion électrique est directement connectée à l'entrée externe d'une autre unité d'alimentation de propulsion électrique.

Un tel système permet d'améliorer sensiblement la fiabilité de la commande de moteurs électrique de propulsion d'un satellite. En effet, en cas d'une panne d'une unité d'alimentation de propulsion électrique (ou de plusieurs unités d'alimentation sans que deux d'entre-elles ne soient reliées à un même moteur électrique), aucun moteur électrique de propulsion n'est perdu, car il peut alors quand même être alimenté par une autre unité d'alimentation de propulsion électrique, par l'intermédiaire de l'entrée externe de l'unité d'alimentation de propulsion électrique défaillante, qui est connectée à une première sortie externe de cette autre unité d'alimentation de propulsion électrique.

Par exemple, dans un cas classique, le satellite a quatre moteurs électriques de propulsion (N=4).

Il est également proposé, selon un aspect de l'invention, un système de gestion de propulsion électrique d'un satellite, comprenant une unité de commande électronique, une pluralité de N unités d'alimentation de propulsion électrique telles que décrites précédemment, une pluralité de N+k moteurs électriques de propulsion dont N sont respectivement reliés aux N unités d'alimentation de propulsion électrique, chaque unité d'alimentation de propulsion électrique est connectée, par sa deuxième sortie externe, à un moteur électrique, chaque liaison entre la sortie du deuxième élément de sélection et le moteur électrique comprend un filtre de bruit d'émission conduite, k premières sorties externes d'unités d'alimentation de propulsion électrique sont connectées aux k moteurs électriques restants. Chaque liaison entre la sortie du premier élément de sélection et le moteur électrique comprend un filtre de bruit d'émission conduite, et les N-k premières sorties externes restantes d'une unité d'alimentation de propulsion électrique sont directement connectées à l'entrée externe d'une autre unité d'alimentation de propulsion électrique.

Un tel système permet également d'améliorer sensiblement la fiabilité de la commande de moteurs électriques de propulsion d'un satellite comprenant plus de moteurs électriques de propulsion, à coût réduit. En effet, dans un tel système, plus la différence k entre le nombre d'unités d'alimentation de propulsion électrique et le nombre de moteurs est faible, plus il y a de moteurs pouvant être alimentés par deux unités d'alimentation de propulsion électrique différentes, et donc plus l'amélioration en terme de fiabilité est importante.

Par exemple, un satellite peut avoir quatre moteurs électriques de propulsion mais seulement trois unités d'alimentation de propulsion électrique (N=3 et k=1).

L'invention sera mieux comprise à l'étude de quelques modes de réalisation décrits à titre d'exemples nullement limitatifs et illustrés par les dessins annexés sur lesquels :
- les figures 1a et 1b illustrent schématiquement, un système de propulsion électrique de satellite, selon l'état de l'art ;
- les figure 2, 3, 4a et 4b illustrent des modes de réalisation d'unité d'alimentation de propulsion électrique de satellite, selon divers aspects de l'invention;
- la figure 5 illustre schématiquement un exemple de réalisation d'un premier élément de sélection d'une unité d'alimentation de propulsion électrique de satellite, selon un aspect de l'invention;
- les figures 6a et 6b illustrent schématiquement deux exemples de réalisation d'un deuxième élément de sélection d'une unité d'alimentation de propulsion électrique de satellite, selon deux aspects de l'invention;
- les figures 7a et 7b illustrent schématiquement deux exemples de réalisation d'un système de gestion de propulsion électrique d'un satellite, selon deux aspects de l'invention; et
- les figures 8a et 8b illustrent schématiquement deux exemples de réalisation d'un système de gestion de propulsion électrique d'un satellite, selon deux autres aspects de l'invention.

Sur les différentes figures, les éléments ayant des références identiques sont identiques.

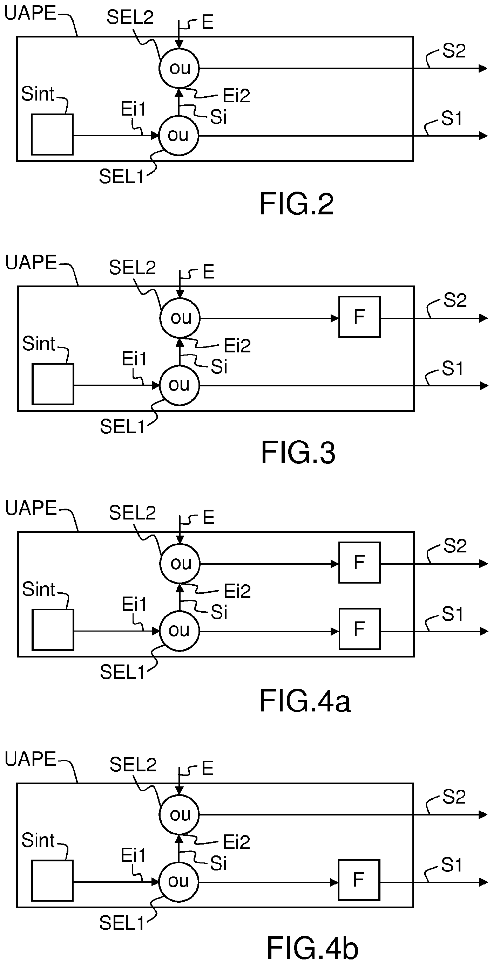

La figure 2 représente une unité UAPE d'alimentation de propulsion électrique de satellite qui comprend une source interne Sint de puissance électrique, et une entrée externe E adaptée pour recevoir une puissance électrique d'une source externe de puissance électrique, notamment d'une autre unité UAPE d'alimentation de propulsion électrique.

L'unité UAPE d'alimentation de propulsion électrique de satellite comprend également une première sortie externe S1 et une deuxième sortie externe S2 adaptées pour délivrer en sortie respectivement une première puissance électrique et une deuxième puissance électrique. L'unité UAPE d'alimentation de propulsion électrique de satellite comprend aussi un premier élément de sélection SEL1 et un deuxième élément de sélection SEL2.

Le premier élément de sélection SEL1 est muni d'une première entrée interne Ei1 connectée à la source interne Sint, et de deux sorties : la première sortie externe S1 et une sortie interne Si connectée à une deuxième entrée interne Ei2 du deuxième élément de sélection SEL2.

Le deuxième élément de sélection SEL2 est muni d'une sortie correspondant à la deuxième sortie externe S2 et de deux entrées : l'entrée externe E et la deuxième entrée interne Ei2.

La figure 3 illustre un cas de réalisation d'une unité UAPE d'alimentation de propulsion électrique de satellite telle qu'illustrée sur la figure 2, qui comprend un filtre de bruit d'émission conduite F disposé directement en amont de la deuxième sortie S2, dans l'unité UAPE d'alimentation.

La figure 4a illustre un cas de réalisation d'une unité UAPE d'alimentation de propulsion électrique de satellite telle qu'illustrée sur la figure 3, qui comprend aussi un filtre de bruit d'émission conduite F disposé directement en amont de la première sortie S1, dans l'unité UAPE d'alimentation.

La figure 4b illustre un cas de réalisation d'une unité UAPE d'alimentation de propulsion électrique de satellite telle qu'illustrée sur la figure 2, qui comprend un filtre de bruit d'émission conduite F disposé directement en amont de la première sortie S1, dans l'unité UAPE d'alimentation.

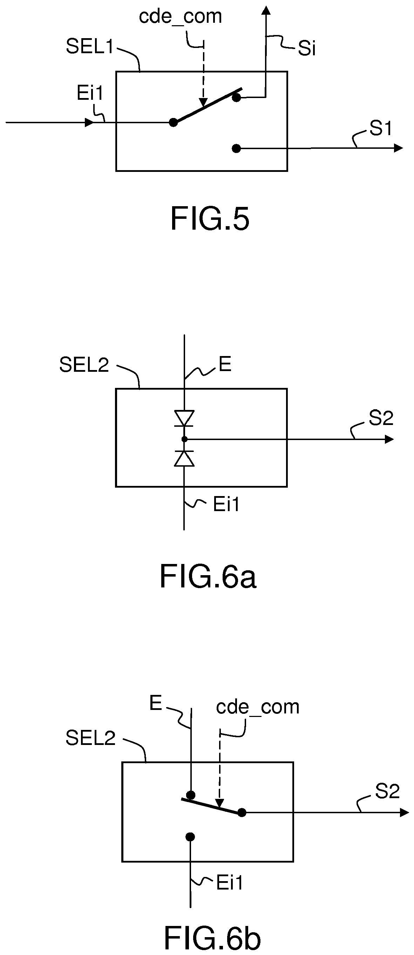

La figure 5 représente un exemple de réalisation d'un premier élément de sélection SEL1 d'une unité UAPE d'alimentation de propulsion électrique de satellite d'une des figures 2, 3, 4a ou 4b, réalisé au moyen d'un commutateur, commandé par une commande externe cde_com.

La figure 6a représente un exemple de réalisation d'un deuxième élément de sélection SEL2 d'une unité UAPE d'alimentation de propulsion électrique de satellite d'une des figures 2, 3, 4a ou 4b, réalisé au moyen de deux diodes, avec une diode disposée en aval de chacune des deux entrées E, Ei2.

La figure 6b représente un exemple de réalisation alternative d'un deuxième élément de sélection SEL2 d'une unité UAPE d'alimentation de propulsion électrique de satellite d'une des figures 2, 3, 4a ou 4b, réalisé avec un commutateur, commandé par une commande externe cde_com.

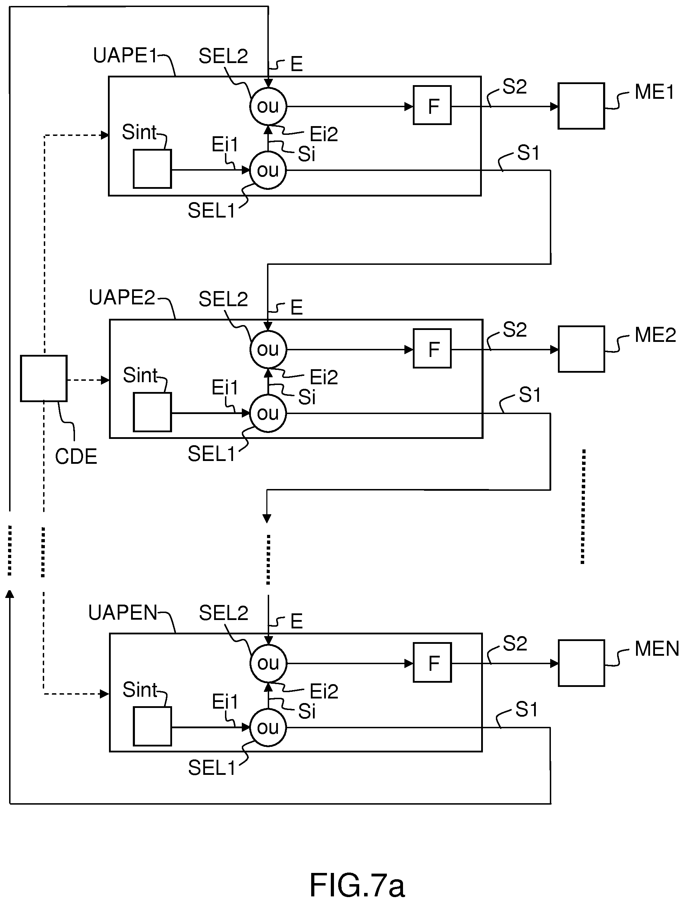

La figure 7a représente un système de gestion de propulsion électrique d'un satellite, comprenant une unité de commande électronique CDE, une pluralité de N unités d'alimentation de propulsion électrique UAPE1, ..., UAPEN comme décrites précédemment, respectivement reliées à N moteurs électriques ME1, ..., MEN de propulsion. Chaque unité d'alimentation de propulsion électrique UAPE1, ..., UAPEN est connectée, par sa deuxième sortie externe S2, à un moteur électrique ME1, ..., MEN respectif.

Chaque liaison entre la sortie du deuxième élément de sélection SEL2 et le moteur électrique correspondant ME1, ..., MEN comprend un filtre de bruit d'émission conduite F, et chaque première sortie externe S1 d'une unité d'alimentation de propulsion électrique UAPE1, ..., UAPEN est directement connectée à l'entrée externe E d'une autre unité d'alimentation de propulsion électrique.

Sur le mode de réalisation de la figure 7a, tous les filtres F de bruit d'émission conduite sont internes aux unités d'alimentation de propulsion électrique UAPE1, ..., UAPEN.

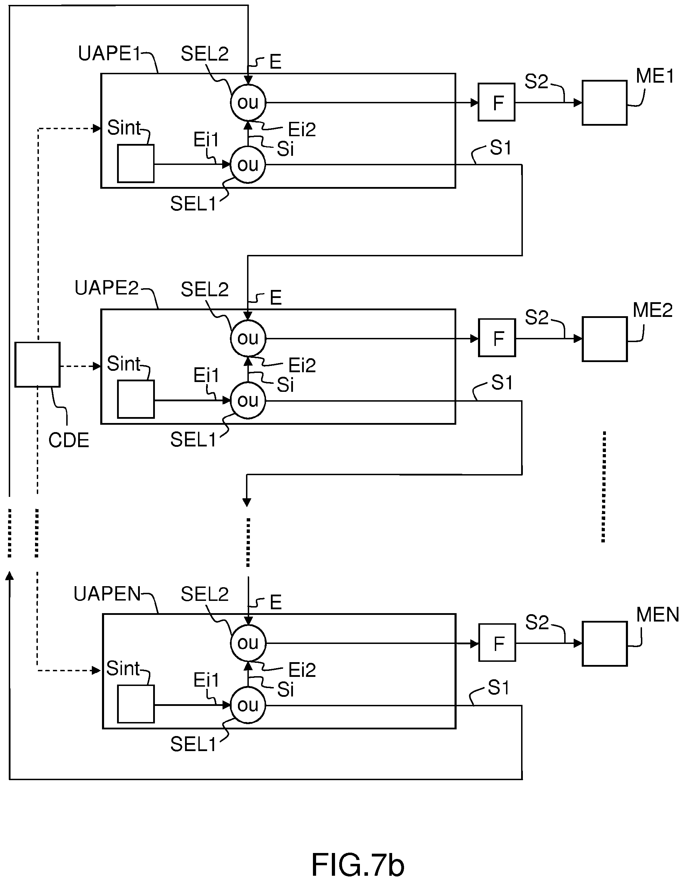

En variante, sur la figure 7b tous les filtres F de bruit d'émission conduite sont externes aux unités d'alimentation de propulsion électrique UAPE1, ..., UAPEN.

Bien entendu, pour d'autres variantes, non représentées sur les figures, certains filtres F de bruit d'émission conduite sont internes à des unités d'alimentation de propulsion électrique, et les autres filtres F de bruit d'émission conduite restants sont externes aux unités d'alimentation de propulsion électrique restantes.

Pour des raisons de coûts, il est préférable de garder un mode de réalisation dans lequel l'ensemble des filtres sont soit tous internes aux unités d'alimentation de propulsion électrique ou tous externes unités d'alimentation de propulsion électrique, ce qui permet de fabriquer en série un grand nombre d'unités identiques d'alimentation de propulsion électrique. De base, une solution dans laquelle tous les F sont internes est meilleure car moins d'équipements externes sont nécessaires, ce qui signifie moins d'équipements à fabriquer et à tester, donc un coût réduit.

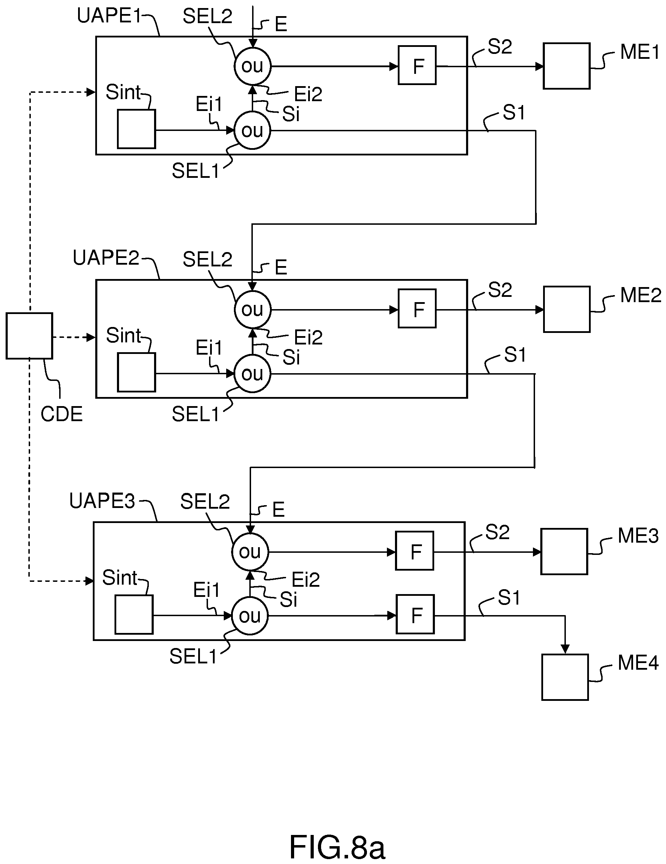

La figure 8a est un exemple de réalisation, non limitatif, d'un système de gestion de propulsion électrique d'un satellite, comprenant trois unités d'alimentation UAPE1, UAPE2, UAPE3, et quatre moteurs électriques ME1, ..., ME4 de propulsion (N=3 et k=1), une unité de commande électronique CDE, une pluralité de trois (N=3) unités d'alimentation de propulsion électrique UAPE1, UAPE2, UAPE3 telles que précédemment décrites, et une pluralité de quatre (N+k=4) moteurs électriques ME1, ..., ME4 de propulsion dont trois (N=3) ME1, ME2, ME3 sont respectivement reliés aux trois (N=3) unités d'alimentation de propulsion électrique UAPE1, ..., UAPE3.

Chaque unité d'alimentation de propulsion électrique UAPE1, UAPE2, UAPE3 est connectée, par sa deuxième sortie externe S2, à un moteur électrique ME1, ME2, ME3, (N=3) et chaque liaison entre la sortie du deuxième élément de sélection SEL2 et un moteur électrique ME1, ME2, ME3 comprend un filtre de bruit d'émission conduite F. Une (k=1) première sortie externe S1 d'unité d'alimentation de propulsion électrique, en l'espèce UAPE3, est connectée au moteur électrique ME4 (k=1).

La liaison entre la sortie du premier élément de sélection SEL1 de l'unité d'alimentation de propulsion électrique UAPE3 et le moteur électrique ME4 comprend un filtre F de bruit d'émission conduite.

Les deux (N-k=3-1=2) premières sorties externe S1 restantes d'une unité d'alimentation UAPE1, UAPE2 de propulsion électrique sont directement connectées à l'entrée externe E d'une autre unité d'alimentation de propulsion électrique.

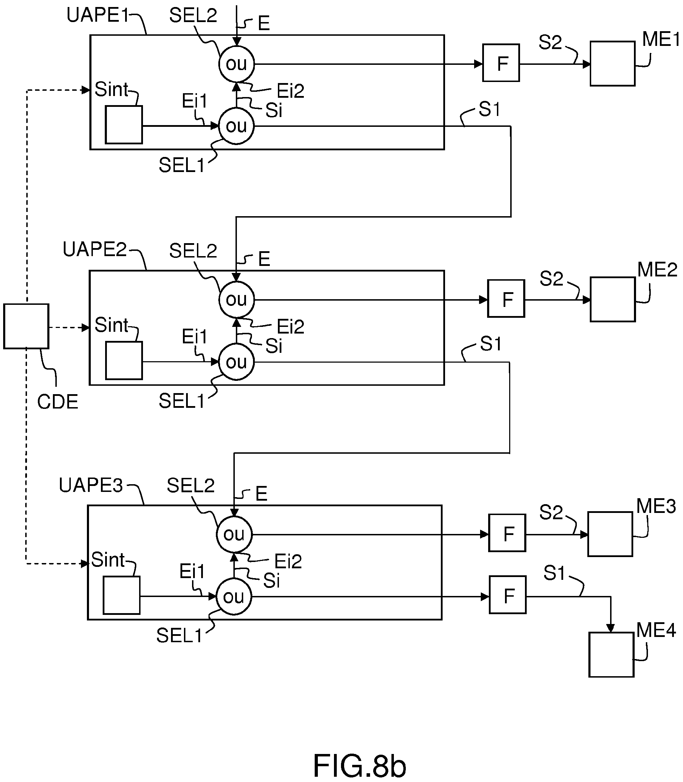

En variante, sur la figure 8b tous les filtres F de bruit d'émission conduite sont externes aux unités d'alimentation de propulsion électrique UAPE1, ..., UAPE3.

Bien entendu, sur d'autres variantes, non représentées sur les figures, certains filtres F de bruit d'émission conduite peuvent être internes à des unités d'alimentation de propulsion électrique et les autres filtres F de bruit d'émission conduite restants peuvent être externes aux unités d'alimentation de propulsion électrique restantes.

Les figures 8a et 8b représentent des cas particulièrement intéressants à trois unités d'alimentation de propulsion électrique et quatre moteurs électriques de propulsion (N=3, k=1), de manière non limitative, car il est clair que ces modes de réalisation peuvent être aisément extrapolés à N unités d'alimentation de propulsion électrique et N+k moteurs électriques de propulsion.

La présente invention propose donc des unités d'alimentation de propulsion électrique de satellite qui sont de coût réduit car elle contiennent de nombreux éléments déjà intégrés, ainsi que des systèmes de gestion de propulsion électrique de satellite de fiabilité améliorée et de coût réduit.

## Revendications

1. Unité (UAPE) d'alimentation de propulsion électrique de satellite comprenant:
- une entrée externe (E) adaptée pour recevoir une puissance électrique d'une source externe de puissance électrique;
- une première sortie externe (S1) et une deuxième sortie externe (S2) adaptées pour délivrer en sortie respectivement une première puissance électrique et une deuxième puissance électrique; **caractérisé en ce que** l'unité (UAPE) d'alimentation de propulsion électrique de satellite comprend:
- une source interne (Sint) de puissance électriques;
- un premier élément de sélection (SEL1) et un deuxième élément de sélection (SEL2) tels que:
- le premier élément de sélection (SEL1) est muni d'une première entrée interne (Ei1) connectée à la source interne (Sint) et de deux sorties : la première sortie externe (S1) et une sortie interne (Si) connectée à une deuxième entrée interne (Ei2) du deuxième élément de sélection (SEL2); et
- le deuxième élément de sélection (SEL2) est muni d'une sortie correspondant à la deuxième sortie externe (S2) et de deux entrées : l'entrée externe (E) et la deuxième entrée interne (Ei2).

2. Unité (UAPE) d'alimentation de propulsion électrique de satellite selon la revendication 1, comprenant un filtre de bruit d'émission conduite (F) disposé directement en amont de la deuxième sortie (S2).

3. Unité (UAPE) d'alimentation de propulsion électrique de satellite selon la revendication 1 ou 2, comprenant un filtre de bruit d'émission conduite (F) disposé directement en amont de la première sortie (S1).

4. Unité (UAPE) d'alimentation de propulsion électrique de satellite selon l'une des revendications 1 à 3, dans lequel le premier élément de sélection (SEL1) comprend un commutateur.

5. Unité (UAPE) d'alimentation de propulsion électrique de satellite selon l'une des revendications 1 à 4, dans lequel le deuxième élément de sélection (SEL2) comprend une diode disposée en aval de chacune des deux entrées (E, Ei2).

6. Unité (UAPE) d'alimentation de propulsion électrique de satellite selon l'une des revendications 1 à 4, dans lequel le deuxième élément de sélection (SEL2) comprend un commutateur.

7. Système de gestion de propulsion électrique d'un satellite, comprenant une unité de commande électronique (CDE), une pluralité de N unités d'alimentation de propulsion électrique (UAPE₁, ..., UAPE_{N}) selon l'une des revendications 1 à 6, respectivement reliées à N moteurs électriques (ME₁, ..., ME_{N}) de propulsion, chaque unité d'alimentation de propulsion électrique (UAPE₁, ..., UAPE_{N}) est connectée, par sa deuxième sortie externe (S2), à un moteur électrique (ME₁, ..., ME_{N}), chaque liaison entre la sortie du deuxième élément de sélection (SEL2) et le moteur électrique (ME₁, ..., ME_{N}) comprend un filtre de bruit d'émission conduite (F), et chaque première sortie externe (S1) d'une unité d'alimentation de propulsion électrique est directement connectée à l'entrée externe (E) d'une autre unité d'alimentation de propulsion électrique.

8. Système selon la revendication 7, dans lequel N vaut 4.

9. Système de gestion de propulsion électrique d'un satellite, comprenant une unité de commande électronique (CDE), une pluralité de N unités d'alimentation de propulsion électrique (UAPE₁, ..., UAPE_{N}) selon l'une des revendications 1 à 6, une pluralité de N+k moteurs électriques (ME₁, ..., ME_{N+k}) de propulsion dont N (ME₁, ..., MEN) sont respectivement reliés aux N unités d'alimentation de propulsion électrique (UAPE₁, ..., UAPE_{N}), chaque unité d'alimentation de propulsion électrique (UAPE₁, ..., UAPE_{N}) est connectée, par sa deuxième sortie externe (S2), à un moteur électrique (ME₁, ..., ME_{N}), chaque liaison entre la sortie du deuxième élément de sélection (SEL2) et le moteur électrique (ME₁, ..., ME_{N}) comprend un filtre de bruit d'émission conduite (F), k premières sorties externes (S1) d'unités d'alimentation de propulsion électrique sont connectées aux k moteurs électriques restants (ME_{N+1}, ..., ME_{N+k}), chaque liaison entre la sortie du premier élément de sélection (SEL1) et le moteur électrique (ME_{N+1}, ..., ME_{N+k}) comprend un filtre de bruit d'émission conduite (F), et les N-k premières sorties externes (S1) restantes d'une unité d'alimentation de propulsion électrique sont directement connectées à l'entrée externe (E) d'une autre unité d'alimentation de propulsion électrique.

10. Système selon la revendication 9, dans lequel N vaut 3 et k vaut
1.

## Patentansprüche

1. Stromversorgungseinheit (UAPE) für einen elektrischen Satellitenantrieb, die Folgendes umfasst:
- einen externen Eingang (E) zum Empfangen von elektrischer Leistung von einer externen elektrischen Leistungsquelle;
- einen ersten externen Ausgang (S1) und einen zweiten externen Ausgang (S2) zum Liefern am Ausgang jeweils einer ersten elektrischen Leistung und einer zweiten elektrischen Leistung; **dadurch gekennzeichnet, dass** die Stromversorgungseinheit (UAPE) des elektrischen Satellitenantriebs Folgendes umfasst:
- eine interne Quelle (Sint) für elektrische Leistung;
- ein erstes Auswahlelement (SEL1) und ein zweites Auswahlelement (SEL2), so dass:
- das erste Auswahlelement (SEL1) mit einem ersten internen Eingang (Ei1), der mit der internen Quelle (Sint) verbunden ist, und zwei Ausgängen versehen ist: dem ersten externen Ausgang (S1) und einem internen Ausgang (Si), der mit einem zweiten internen Eingang (Ei2) des zweiten Auswahlelements (SEL2) verbunden ist; und
- das zweite Auswahlelement (SEL2) mit einem Ausgang entsprechend dem zweiten externen Ausgang (S2) und zwei Eingängen versehen ist: dem externen Eingang (E) und dem zweiten internen Eingang (Ei2).

2. Stromversorgungseinheit (UAPE) für einen elektrischen Satellitenantrieb nach Anspruch 1, die ein Leitungsemissionsrauschfilter (F) umfasst, das direkt stromaufwärts des zweiten Ausgangs (S2) angeordnet ist.

3. Stromversorgungseinheit (UAPE) für einen elektrischen Satellitenantrieb nach Anspruch 1 oder 2, die ein Leitungsemissionsrauschfilter (F) umfasst, das direkt stromaufwärts des ersten Ausgangs (S1) angeordnet ist.

4. Stromversorgungseinheit (UAPE) für einen elektrischen Satellitenantrieb nach einem der Ansprüche 1 bis 3, bei der das erste Auswahlelement (SEL1) einen Schalter umfasst.

5. Stromversorgungseinheit (UAPE) für einen elektrischen Satellitenantrieb nach einem der Ansprüche 1 bis 4, bei der das zweite Auswahlelement (SEL2) eine Diode umfasst, die stromabwärts von jedem der beiden Eingänge (E, Ei2) angeordnet ist.

6. Stromversorgungseinheit (UAPE) für einen elektrischen Satellitenantrieb nach einem der Ansprüche 1 bis 4, bei der das zweite Auswahlelement (SEL2) einen Schalter umfasst.

7. System zum Regulieren des elektrischen Antriebs eines Satelliten, das eine elektronische Steuereinheit (CDE), eine Mehrzahl von N Stromversorgungseinheiten des elektrischen Antriebs (UAPE₁, ..., UAPE_{N}) nach einem der Ansprüche 1 bis 6 umfasst, jeweils verbunden mit N Elektroantriebsmotoren (ME₁, ..., ME_{N}), wobei jede Stromversorgungseinheit des elektrischen Antriebs (UAPE₁, ..., UAPE_{N}) über ihren zweiten externen Ausgang (S2) mit einem Elektromotor (ME₁, ..., ME_{N}) verbunden ist, wobei jede Verbindung zwischen dem Ausgang des zweiten Auswahlelements (SEL2) und dem Elektromotor (ME₁, ..., ME_{N}) ein Leitungsemissionsrauschfilter (F) umfasst und jeder erste externe Ausgang (S1) einer Stromversorgungseinheit des elektrischen Antriebs direkt mit dem externen Eingang (E) einer anderen Stromversorgungseinheit des elektrischen Antriebs verbunden ist.

8. System nach Anspruch 7, bei dem N 4 ist.

9. System zum Regulieren des elektrischen Antriebs eines Satelliten, das Folgendes umfasst: eine elektronische Steuereinheit (CDE), eine Mehrzahl von N Stromversorgungseinheiten des elektrischen Antriebs (UAPE₁, ..., UAPE_{N}) nach einem der Ansprüche 1 bis 6, eine Mehrzahl von N+k Elektroantriebsmotoren (ME₁, ..., ME_{N+k}), von denen N (ME₁, ..., ME_{N}) jeweils mit den N Stromversorgungseinheiten des elektrischen Antriebs (UAPE₁, ..., UAPE_{N}) verbunden sind, wobei jede Stromversorgungseinheit des elektrischen Antriebs (UAPE₁, ..., UAPE_{N}) über ihren zweiten externen Ausgang (S2) mit einem Elektromotor (ME₁, ..., ME_{N}) verbunden ist, wobei jede Verbindung zwischen dem Ausgang des zweiten Auswahlelements (SEL2) und dem Elektromotor (ME₁, ..., ME_{N}) ein Leitungsemissionsrauschfilter (F) umfasst, k erste externe Ausgänge (S1) von Stromversorgungseinheiten des elektrischen Antriebs mit den übrigen k Elektromotoren (ME_{N+1}, ..., ME_{N+k}) verbunden ist, jede Verbindung zwischen dem Ausgang des ersten Auswahlelements (SEL1) und dem Elektromotor (ME_{N+1}, ..., ME_{N+k}) ein Leitungsemissionsrauschfilter (F) umfasst, und die übrigen N-k ersten externen Ausgänge (S1) einer Stromversorgungseinheit des elektrischen Antriebs direkt mit dem externen Eingang (E) einer anderen Stromversorgungseinheit des elektrischen Antriebs verbunden sind.

10. System nach Anspruch 9, bei dem N 3 ist und k 1 ist.

## Claims

1. Satellite electric propulsion supply unit (UAPE) comprising:
- an external input (E) which is suitable for receiving electrical power from an external source of electrical power;
- a first external output (S1) and a second external output (S2) which are suitable for supplying at the output a first electrical power and a second electrical power, respectively; **characterised in that** the satellite electric propulsion supply unit (UAPE) comprises:
- an internal source (Sint) of electrical power;
- a first selection element (SEL1) and a second selection element (SEL2) such that:
- the first selection element (SEL1) is provided with a first internal input (Ei1) which is connected to the internal source (Sint) and two outputs: the first external output (S1) and an internal output (Si) which is connected to a second internal input (Ei2) of the second selection element (SEL2); and
- the second selection element (SEL2) is provided with an output which corresponds to the second external output (S2) and two inputs: the external input (E) and the second internal input (Ei2).

2. Satellite electric propulsion supply unit (UAPE) according to claim 1, comprising a conducted emission noise filter (F) which is arranged directly upstream of the second output (S2).

3. Satellite electric propulsion supply unit (UAPE) according to claim 1 or claim 2, comprising a conducted emission noise filter (F) which is arranged directly upstream of the first output (S1).

4. Satellite electric propulsion supply unit (UAPE) according to any one of claims 1 to 3, wherein the first selection element (SEL1) comprises a commutator.

5. Satellite electric propulsion supply unit (UAPE) according to any one of claims 1 to 4, wherein the second selection element (SEL2) comprises a diode which is arranged downstream of each of the two inputs (E, Ei2).

6. Satellite electric propulsion supply unit (UAPE) according to any one of claims 1 to 4, wherein the second selection element (SEL2) comprises a commutator.

7. Satellite electric propulsion control system comprising an electronic control unit (CDE), a plurality of N electric propulsion supply units (UAPE₁, ... UAPE_{N}) according to any one of claims 1 to 6, connected to N electric propulsion motors (ME₁, ..., ME_{N}), respectively, each electric propulsion supply unit (UAPE₁, ... UAPE_{N}) is connected, via the second external output (S2) thereof, to an electric motor (ME₁, ..., ME_{N}), each connection between the output of the second selection element (SEL2) and the electric motor (ME₁, ..., ME_{N}) comprises a conducted emission noise filter (F) and each first external output (S1) of an electric propulsion supply unit is directly connected to the external input (E) of another electric propulsion supply unit.

8. System according to claim 7, wherein N is 4.

9. System for controlling electric propulsion of a satellite comprising an electronic control unit (CDE), a plurality of N electric propulsion supply units (UAPE₁, ... UAPE_{N}) according to any one of claims 1 to 6, a plurality of N+k electric propulsion motors (ME₁, ..., ME_{N+k}), of which N (ME₁, ..., ME_{N}) are connected to the N electric propulsion supply units (UAPE₁, ... UAPE_{N}), respectively, each electric propulsion supply unit (UAPE₁, ... UAPE_{N}) is connected, via the second external output (S2) thereof, to an electric motor (ME₁, ..., ME_{N}), each connection between the output of the second selection element (SEL2) and the electric motor (ME₁, ..., ME_{N}) comprises a conducted emission noise filter (F), k first external outputs (S1) of electric propulsion supply units are connected to the k remaining electric motors (ME_{N+1}, ..., ME_{N+k}), each connection between the output of the first selection element (SEL1) and the electric motor (ME_{N+1}, ..., ME_{N+k}) comprises a conducted emission noise filter (F), and the remaining N-k first external outputs (S1) of an electric propulsion supply unit are directly connected to the external input (E) of another electric propulsion supply unit.

10. System according to claim 9, wherein N is 3 and k is 1.
